# EUROPÄISCHE PATENTSCHRIFT

(11) **EP 1 834 719 B1**
(45) Veröffentlichungstag und Bekanntmachung des Hinweises auf die Patenterteilung: **07.09.2011**
(21) Anmeldenummer: 07004435.9
(22) Anmeldetag: 05.03.2007
(51) Int. Cl.: B23B 3/30, B23Q 39/02

(54) **Werkzeugmaschine und Verfahren zur spanabhebenden Bearbeitung von Werkstücken, insbesondere von metallischen Werkstücken**
Machine tool and method for machining workpieces, in particular metal workpieces
Machine-outil et procédé destiné au traitement par enlèvement de copeaux de pièces usinées, en particulier de pièces usinées métalliques

(30) Priorität: 14.03.2006 DE 102006013418
(43) Veröffentlichungstag der Anmeldung: 19.09.2007
(60) Teilanmeldung: 10172390.6
(73) Patentinhaber: STAMA MASCHINENFABRIK GMBH, D-73278 Schlierbach (DE)
(72) Erfinder: Feinauer, Achim, Dr., 73033 Göppingen (DE); Blazek, Pavel, 72377 Owen (DE)
(74) Vertreter: Duhme, Torsten

(56) Entgegenhaltungen:
- EP-A- 1 004 397
- EP-A- 1 607 176
- DE-C1- 19 635 258
- US-A1- 2002 020 258

## Beschreibung

Die vorliegende Erfindung betrifft eine Werkzeugmaschine zur spanabhebenden Bearbeitung von Werkstücken, insbesondere von metallischen Werkstücken, mit einer ersten Werkzeugspindel zur Aufnahme eines ersten, um eine erste Drehachse rotierenden Bearbeitungswerkzeugs und einer zweiten Werkzeugspindel zur Aufnahme eines zweiten, um eine zweite Drehachse rotierenden Bearbeitungswerkzeugs und mit einem ersten und einem zweiten Werkstückträger zur Aufnahme eines ersten und eines zweiten Werkstücks, wobei die erste Werkzeugspindel relativ zu dem ersten und relativ zu dem zweiten Werkstückträger verfahrbar ist, um wahlweise das erste oder das zweite Werkstück zu bearbeiten, und wobei die zweite Werkzeugspindel relativ zu dem zweiten Werkstückträger verfahrbar ist, um das zweite Werkstück zu bearbeiten, wobei zumindest einer der Werkstückträger eine Drehachse besitzt, um die ein Werkstück gedreht werden kann, wobei das Werkstück im Wesentlichen koaxial zu der Drehachse in den Werkstückträger einspannbar ist, wobei der erste und der zweite Werkstückträger relativ zueinander verfahrbar sind, um ein Werkstück von einem Werkstückträger zum anderen Werkstückträger zu übergeben.

Die Erfindung betrifft ferner ein Verfahren zur spanabhebenden Bearbeitung von Werkstücken, insbesondere von metallischen Werkstücken, mit den Schritten:
- Einspannen eines ersten Werkstücks in einen ersten Werkstückträger,
- Einspannen eines ersten, um eine erste Drehachse rotierenden Bearbeitungswerkzeugs in eine erste Werkzeugspindel,
- Bearbeiten des ersten Werkstücks in dem ersten Werkstückträger mit Hilfe des ersten rotierenden Bearbeitungswerkzeugs, um ein teilbearbeitetes Werkstück herzustellen,
- Übergeben des teilbearbeiteten Werkstücks an einen zweiten Werkstückträger, wobei der zweite Werkstückträger relativ zu dem ersten Werkstückträger verfahren wird, um das teilbearbeitete Werkstück zu übernehmen, und
- Bearbeiten des teilbearbeiteten Werkstücks in dem zweiten Werkstückträger, wobei das teilbearbeitete Werkstück in dem zweiten Werkstückträger mit Hilfe eines zweiten, um eine zweite Drehachse rotierenden Bearbeitungswerkzeugs bearbeitet wird, das in eine zweite Werkzeugspindel eingespannt wird.

Eine solche Werkzeugmaschine und ein entsprechendes Verfahren sind aus US 2002/0020258 A1 bekannt.

Die bekannte Werkzeugmaschine ist mit zwei gegenüberliegenden Werkstückspindeln und insgesamt drei Revolverköpfen ausgestattet, wobei die Revolverköpfe zur Aufnahme von verschiedenen Werkzeugen, u.a. auch von rotierenden Bearbeitungswerkzeugen ausgebildet sind. Mit dieser Werkzeugmaschine ist zum einen eine zeitgleiche Bearbeitung von zwei Werkstücken und zum anderen eine 6-Seiten-Bearbeitung von Werkstücken möglich. Aufgrund der konstruktiven Ausgestaltung dieser Werkzeugmaschine, insbesondere der konstruktiven Ausgestaltung der Revolverköpfe, ist eine Verschwenkbarkeit der Werkstückspindeln zur Realisierung der 6-Seiten-Bearbeitung nicht erforderlich.

Aus DE 196 35 258 C1 ist eine Werkzeugmaschine bekannt, bei der die Werkzeugspindel an einem Fahrständer angeordnet ist, der in drei zueinander senkrechten Raumachsen verfahren werden kann. Die Werkzeugspindel zeigt dabei mit ihrem Werkzeug nach unten. Unterhalb der Werkzeugspindel ist ein Werkstückträger in Form einer Werkstückspindel angeordnet. Die Werkstückspindel dient zur Aufnahme von stangenförmigen Werkstücken, und sie ist um eine Schwenkachse verschwenkbar gelagert, so dass die Werkstückstange sowohl in eine horizontale als auch in eine vertikale Lage gebracht werden kann. Zusätzlich kann die Werkstückstange um ihre Längsachse gedreht werden, so dass eine 5-Achs-Bearbeitung der Werkstückstange möglich ist. Mit dieser bekannten Werkzeugmaschine kann eine Vielzahl von Werkstücken "von der Stange" hergestellt werden. In einer, Weiterbildung, die in DE 196 35 258 C1 allerdings nur kurz erwähnt ist, besitzt die bekannte Werkzeugmaschine einen zweiten Werkstückträger, mit dem ein teilbearbeitetes Werkstück aus der Werkstückspindel entnommen werden kann, um eine Bearbeitung der sog. sechsten Seite zu ermöglichen, d.h. der in der Werkstückspindel eingespannten Seite des Werkstücks. Die Anmelderin der vorliegenden Erfindung vertreibt solche Werkzeugmaschinen bspw. unter der Bezeichnung MC 726/MT. Dadurch, dass die Werkstücke während der gesamten Bearbeitung in einem der beiden Werkstückträger positionsgenau eingespannt sind, ist eine 6-Seiten-Bearbeitung mit einer sehr hohen Präzision möglich. Eine zeitgleiche Bearbeitung von zwei Werkstücken ist mit dieser Werkzeugmaschine nicht möglich.

Aus DE 100 29 967 A1 ist eine Werkzeugmaschine zur Bearbeitung von optischen Werkstücken bekannt, die zwei nebeneinander angeordnete Werkzeugspindeln und zwei nebeneinander angeordnete Werkstückspindeln besitzt, wobei sich jeweils eine Werkzeugspindel und eine Werkstückspindel gegenüberstehen, um die Bearbeitung von Werkstücken zu ermöglichen. Eine direkte Übergabe eines teilbearbeiteten Werkstücks von einer Werkstückspindel zur anderen ist weder vorgesehen noch möglich. Für eine 6-Seiten-Bearbeitung muss ein teilbearbeitetes Werkstück daher von einem Werkstückträger auf den anderen Werkstückträger umgespannt werden, was aufgrund von Positionsfehlern beim Umspannen die Bearbeitungsgenauigkeit beeinträchtigen kann.

Aus DE 33 20 940 A1 und DE 203 01 126 U1 sind Werkzeugmaschinen mit mehreren Arbeitsspindeln bekannt. Bei der DE 33 20 940 A1 handelt es sich um eine zweispindelige Drehmaschine, wobei die beiden Arbeitsspindeln (= Werkstückspindeln) um 180° versetzt zueinander angeordnet sind, um eine Übergabe eines teilbearbeiteten Werkstücks von einer Arbeitsspindel zur anderen zu ermöglichen. Die bekannte Maschine ermöglicht allerdings nur eine Drehbearbeitung von Werkstücken, d.h. sie ist in Bezug auf die Bearbeitungsflexibilität und die Komplexität der hergestellten Werkstücke begrenzt.

Die Werkzeugmaschine aus DE 203 01 126 U1 ist für eine zeitgleiche Bearbeitung von zwei identischen Werkstücken in zwei parallelen Aufspannungen ausgebildet. Die Übergabe eines (teilbearbeiteten) Werkstücks von einem Werkstückträger zum anderen ist weder vorgesehen noch möglich. Dementsprechend ist die Bearbeitungsgenauigkeit dieser bekannten Werkzeugmaschine bei einer 6-Seiten-Bearbeitung begrenzt.

Aus EP 1 004 397 A2 ist eine Werkzeugmaschine bekannt, die zwei Werkzeugspindeln aufweist, mit denen ein Werkstück, das fest auf einem Tisch der Werkzeugmaschine montiert ist, bearbeitet werden kann. Dadurch dass das Werkstück fest montiert ist, ist mit dieser Werkzeugmaschine eine vollautomatische 6-Seiten-Bearbeitung des Werkstückes nicht möglich. Dies bedeutet, dass um eine 6-Seiten-Bearbeitung vornehmen zu können, ein manuelles Umspannen des Werkstückes erforderlich ist, was zu einem Verlust an Präzision führt.

Vor diesem Hintergrund ist es eine Aufgabe der vorliegenden Erfindung, eine bekannte Werkzeugmaschine und ein bekanntes Verfahren derart weiterzubilden, dass eine präzisere 6-Seiten-Bearbeitung von komplexen Werkstücken bei gleichzeitig hoher Bearbeitungsflexibilität und hoher Produktivität möglich ist.

Erfindungsgemäß wird diese Aufgabe durch eine Werkzeugmaschine der eingangs genannten Art gelöst, bei der der zumindest eine Werkstückträger eine Schwenkachse besitzt, die senkrecht zu der Drehachse sowie senkrecht zu der ersten und/oder zweiten Drehachse verläuft, und bei der der erste und der zweite Werkstückträger dergestalt relativ zueinander verfahrbar sind, dass der zumindest eine Werkstückträger um seine Schwenkachse geschwenkt wird, um das Werkstück von dem einen Werkstückträger zu dem anderen Werkstückträger zu übergeben.

Erfindungsgemäß wird diese Aufgabe weiter durch ein Verfahren der eingangs genannten Art gelöst, bei dem der zweite Werkstückträger dergestalt relativ zu dem ersten Werkstückträger verfahren wird, um das teilbearbeitete Werkstück zu übernehmen, dass dazu zumindest einer der Werkstückträger um eine Schwenkachse geschwenkt wird, die der jeweilige Werkstückträger besitzt und die senkrecht zu einer Drehachse, die der jeweilige Werkstückträger (34, 50) besitzt und um die das in ihm eingespannte teilbearbeitete Werkstück gedreht werden kann, sowie senkrecht zu der ersten und/oder zweiten Drehachse der Bearbeitungswerkzeuge verläuft.

Die neue Werkzeugmaschine und das neue Verfahren verwenden also (zumindest) zwei Werkzeugspindeln in Verbindung mit zwei Werkstückträgern. Die Werkzeugspindeln und Werkstückspindeln sind vorzugsweise so angeordnet, dass eine zeitgleiche, jeweils 5-achsige Bearbeitung von zwei verschiedenen Werkstücken möglich ist. Diese Maßnahme ermöglicht eine hohe Produktivität. Die neue Anordnung der Werkzeugspindeln und Werkstückträger ermöglicht darüber hinaus auch eine sehr flexible Bearbeitung von Werkstücken und insbesondere eine hochpräzise 6-Seiten-Bearbeitung. Grund hierfür ist zum einen die variable Zuordnung des zweiten Werkstückträgers, der wahlweise mit der ersten Werkzeugspindel oder mit der zweiten Werkzeugspindel zusammenwirken kann und zum anderen die Tatsache, dass zumindest einer der Werkstückträger um eine zu der Drehachse senkrecht verlaufende Schwenkachse schwenkbar ist, was die Flexibilität bei der Bearbeitung von Werkstücken noch weiter erhöht. Zudem können komplexe Werkstücke noch schneller und genauer in einer Aufspannung bearbeitet werden.

Für das erfindungsgemäße Verfahren ist es von besonderem Vorteil, wenn das teilbearbeitete Werkstück in dem zweiten Werkstückträger mit Hilfe der zweiten Werkzeugspindel bearbeitet wird, während zeitgleich ein neues (erstes) Werkstück mit Hilfe der ersten Werkzeugspindel und des ersten Werkstückträgers bearbeitet wird.

Dadurch dass der zweite Werkstückträger mit beiden Werkzeugspindeln und zusätzlich noch mit dem ersten Werkstückträger zusammenwirken kann, übernimmt der zweite Werkstückträger eine Doppelfunktion. Er fungiert einerseits als Werkstückträger, der eine Bearbeitung wahlweise mit der ersten oder der zweiten Werkzeugspindel ermöglicht. Darüber hinaus fungiert er als Transportmittel, um ein mit der ersten Werkzeugspindel teilbearbeitetes Werkstück zu der zweiten Werkzeugspindel zu transportieren. Da das teilbearbeitete Werkstück während dieses Transportvorgangs in der exakt definierten Bearbeitungsposition transportiert wird, wird trotz des Wechsels von der ersten zur zweiten Werkzeugspindel eine hohe Bearbeitungsgenauigkeit sichergestellt.

Insgesamt ermöglichen die neue Werkzeugmaschine und das neue Verfahren daher eine hochproduktive und hochpräzise Bearbeitung von Werkstücken. Das neue Maschinenkonzept erlaubt zudem eine relative kostengünstige Realisierung, wie weiter unten anhand bevorzugter Ausführungsbeispiele erläutert wird. Darüber hinaus ermöglichen die neue Maschine und das neue Verfahren eine sehr flexible Bearbeitung von komplexen Werkstücken, wodurch sich Herstellungskosten weiter reduzieren lassen.

Die oben genannte Aufgabe ist daher vollständig gelöst.

In einer bevorzugten Ausgestaltung sind der erste und der zweite Werkstückträger in der Weise ausgebildet, dass jeder Werkzeugträger eine Drehachse besitzt, um die ein

Werkstück gedreht werden kann, wobei das Werkstück im Wesentlichen koaxial zu der Drehachse in den Werkstückträger einspannbar ist.

Diese Maßnahme ermöglicht es, die Verfahrwege der ersten und zweiten Werkzeugspindel zu minimieren, wodurch die Produktivität weiter gesteigert werden kann.

In einer weiteren bevorzugten Ausgestaltung ist der zumindest eine Werkstückträger als Drehspindel ausgebildet, d.h. er ist in der Lage, das Werkstück mit Drehzahlen und Drehmomenten um die Drehachse zu drehen, die eine spanabhebende Drehbearbeitung von metallischen Werkstücken ermöglichen. In einem besonders bevorzugten Ausführungsbeispiel sind beide Werkstückträger als Drehspindeln ausgebildet, und es ist bevorzugt, wenn die Drehspindel(n) in der Lage sind, die Werkstücke mit Drehzahlen von zumindest 1000 Umdrehungen pro Minute und mit einem Drehmoment von zumindest 100 Nm zu drehen.

Diese Ausgestaltung ermöglicht eine besonders flexible und variable Bearbeitung von metallischen Werkstücken. Da sowohl eine Drehbearbeitung als auch eine Fräs- und Bohrbearbeitung über die Werkzeugspindeln möglich sind, lassen sich zudem sehr komplexe Werkstücke mit hoher Präzision und mit der vorteilhaften 6-Seiten-Bearbeitung herstellen.

In einer weiteren Ausgestaltung sind der erste und der zweite Werkstückträger in einer Ebene parallel zu der Drehachse relativ zueinander verfahrbar. In einem besonders bevorzugten Ausführungsbeispiel ist der erste Werkstückträger ortsfest angeordnet, während der zweite Werkstückträger entlang einer Bewegungsachse, die parallel zu der Ebene der Drehachse liegt, verfahren werden kann.

Diese Ausgestaltung ermöglicht eine einfache und hochpräzise Übergabe eines teilbearbeiteten ersten Werkstücks von dem ersten Werkstückträger an den zweiten Werkstückträger. Zudem benötigt der zweite Werkstückträger in der bevorzugten Ausgestaltung nur eine Bewegungsachse, um zwischen einer Übergabeposition und einer Bearbeitungsposition hin- und herzufahren. Die bevorzugte Ausgestaltung ist daher auch eine kostengünstige Realisierung.

In einer weiteren Ausgestaltung besitzen beide Werkstückträger eine Schwenkachse, die senkrecht zu der Drehachse verläuft.

Diese Ausgestaltungen erhöhen die Flexibilität bei der Bearbeitung von Werkstücken noch weiter, weil sie eine 5-Achs-Bearbeitung der Werkstücke ermöglichen. Komplexe Werkstücke können noch schneller und genauer in einer Aufspannung bearbeitet werden.

In einer weiteren Ausgestaltung besitzt die neue Werkzeugmaschine ein erstes und ein zweites Grundgestell, wobei die erste Werkzeugspindel an dem ersten Grundgestell angeordnet ist, während die zweite Werkzeugspindel an dem zweiten Grundgestell angeordnet ist. Vorzugsweise ist jedes Grundgestell separat am Boden oder anderswo verankert.

Diese Ausgestaltung reduziert Vibrationen, Schwingungen und andere mechanische Kopplungen, die die Bearbeitung von Werkstücken mit den beiden Werkzeugspindeln ungünstig beeinflussen könnten. Daher trägt diese Ausgestaltung besonders vorteilhaft zu einer hohen Bearbeitungsgenauigkeit bei.

In einer weiteren Ausgestaltung sind das erste und das zweite Grundgestell voneinander getrennt. In einem bevorzugten Ausführungsbeispiel sind die Grundgestelle mit einem Abstand im Bereich zwischen 0,05 und 1 mm voneinander beabstandet. Des Weiteren ist es bevorzugt, wenn zwischen den beiden Grundgestellen eine Dichtung bspw. in Form einer Dichtschnur angeordnet ist, um das Eindringen von Feuchtigkeit, Kühlmittel oder Spänen zu verhindern.

Diese Ausgestaltung sorgt für eine noch bessere Entkopplung (mechanisch bzw. dynamisch und auch thermisch) der beiden Maschinenteile bzw. Arbeitsbereiche der neuen Werkzeugmaschine und damit für eine noch höhere Genauigkeit bei der zeitgleichen Bearbeitung von ersten und zweiten Werkstücken.

In einer weiteren Ausgestaltung weisen die Grundgestelle eine gemeinsame Umhausung auf. In einem Ausführungsbeispiel handelt es sich zur besseren Entkopplung der beiden Arbeitsbereiche um zwei getrennte Umhausungen, die über eine Labyrinthstruktur miteinander gekoppelt sind.

Diese Ausgestaltung vereinfacht die Übergabe und den Transport eines teilbearbeiteten ersten Werkstücks in den Arbeitsbereich der zweiten Werkzeugspindel. Außerdem lassen sich durch die Verwendung einer gemeinsamen Umhausung die Herstellungskosten der neuen Werkzeugmaschine reduzieren.

In einer weiteren Ausgestaltung besitzt der zweite Werkstückträger eine Schlittenführung, die an einem der Grundgestelle befestigt ist und die balkonartig in das andere Grundgestell hineinragt.

Diese bevorzugte Ausgestaltung ermöglicht eine weitere Entkopplung der beiden Werkzeugspindeln, wobei sich der zweite Werkstückträger weiterhin als vorteilhaftes Transportmittel für ein teilbearbeitetes Werkstück verwenden lässt.

In einer weiteren Ausgestaltung weisen das erste und das zweite Grundgestell eine erste und eine zweite Schlittenführung für den zweiten Werkstückträger auf, wobei die erste und die zweite Schlittenführung aneinander anschließen. In einer weiteren Ausgestaltung verbleibt zwischen der ersten und der zweiten Schlittenführung eine Lücke, über die der zweite Werkstückträger hinüberfahren kann, wenn er zwischen den beiden Arbeitsbereichen/Maschinenteilen hin- und herwechselt. In einem bevorzugten Ausführungsbeispiel liegt die Lücke in einer Größenordnung von etwa 0,05 bis 1 mm.

Auch diese Ausgestaltung ermöglicht eine weitere Entkopplung der beiden Werkzeugspindeln voneinander, wobei der zweite Werkstückträger trotzdem von der einen Werkzeugspindel zur anderen Werkzeugspindel verfahren werden kann. Ein etwaiger Versatz der beiden Schlittenführungen relativ zueinander ist im Hinblick auf die Bearbeitungsgenauigkeit der Werkstücke zu vernachlässigen, weil es für die Bearbeitungsgenauigkeit nur auf die definierte Position des Werkstückträgers relativ zu der Werkzeugspindel ankommt, mit der das im Werkstückträger eingespannte Werkstück bearbeitet wird. Gegenüber einer balkonartigen Realisierung der Schlittenführung besitzt diese Ausgestaltung den Vorteil, dass die Schlittenführungen spannungsfrei über den gesamten Verfahrbereich unterstützt werden können, so dass eine Durchbiegung der Schlittenführungen vermieden wird.

In einer weiteren Ausgestaltung sind die erste und die zweite Werkzeugspindel parallel nebeneinander angeordnet, so dass sie eine Spindelreihe bilden, wobei der zweite Werkstückträger entlang einer Bewegungsachse verfahrbar ist, die im Wesentlichen parallel zu der Spindelreihe verläuft.

Diese Ausgestaltung ermöglicht eine besonders effiziente Bearbeitung von komplexen Werkstücken im Durchlaufbetrieb, wobei der zweite Werkstückträger lediglich eine translatorische Bewegungsachse benötigt. Daher trägt diese Ausgestaltung zu einer kostengünstigen Realisierung der neuen Werkzeugmaschine bei.

In einer weiteren Ausgestaltung ist die erste Werkzeugspindel entlang von drei Bewegungsachsen verfahrbar, während die zweite Werkzeugspindel nur entlang von zwei Bewegungsachsen verfahrbar ist.

Diese Ausgestaltung ist bevorzugt, weil sich die Herstellungskosten für die neue Werkzeugmaschine durch den Verzicht auf eine Bewegungsachse bei der zweiten Werkzeugspindel reduzieren lassen. Die "fehlende" Bewegungsachse der zweiten Werkzeugspindel kann die translatorische Bewegungsachse des zweiten Werkstückträgers kostengünstig ersetzt werden.

In einer weiteren Ausgestaltung beinhaltet die neue Werkzeugmaschine eine gemeinsame Steuereinheit für die erste und die zweite Werkzeugspindel. Es ist außerdem bevorzugt, wenn die gemeinsame Steuereinheit auch die beiden Werkstückträger steuert, sofern diese als Werkzeugspindeln oder in anderer Weise bewegbar ausgeführt sind. Darüber hinaus sind vorzugsweise auch die Kühlmittelanlage, die Hydraulikanlage und/oder weitere Peripherieeinheiten für beide Werkzeugspindeln und/oder Werkstückträger gemeinsam.

Diese Ausgestaltungen ermöglichen eine weitere Reduzierung der Herstellungskosten der neuen Werkzeugmaschine, ohne dass die Flexibilität und Produktivität infolge des neuen Maschinenkonzepts beeinträchtigt wird.

In einer weiteren bevorzugten Ausgestaltung besitzt jede Werkzeugspindel ein eigenes Werkzeugmagazin.

Diese Ausgestaltung ermöglicht eine voneinander vollständig unabhängige, zeitgleiche Bearbeitung von Werkstücken in den beiden Arbeitsbereichen der neuen Werkzeugmaschine. Jedes Werkzeugmagazin kann mit einem vollständigen Werkzeugsatz bestückt werden und ist unabhängig vom anderen Werkzeugmagazin steuerbar. Mit dieser Ausgestaltung kann die Produktivität gegenüber der eingangs genannten Maschine verdoppelt werden, wenn dies für eine Fertigungsaufgabe gewünscht ist. Andererseits profitiert die neue Werkzeugmaschine dieser Ausgestaltung von der hohen Fertigungsflexibilität der oben erläuterten Grundidee.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein bevorzugtes Ausführungsbeispiel der neuen Werkzeugmaschine in einer vereinfachten, teilweise geschnittenen Darstellung,
- Fig. 2: die Werkzeugmaschine aus Fig. 1 in einer alternativen Betriebsstellung, und
- Fig. 3: ein weiteres Ausführungsbeispiel der neuen Werkzeugmaschine in einer weiteren Betriebsstellung.

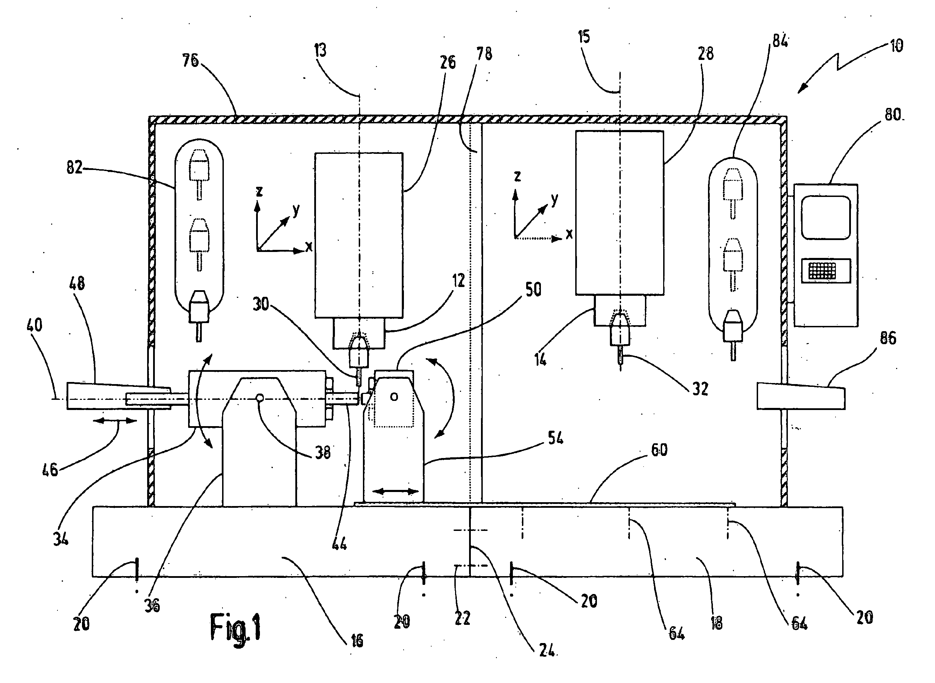

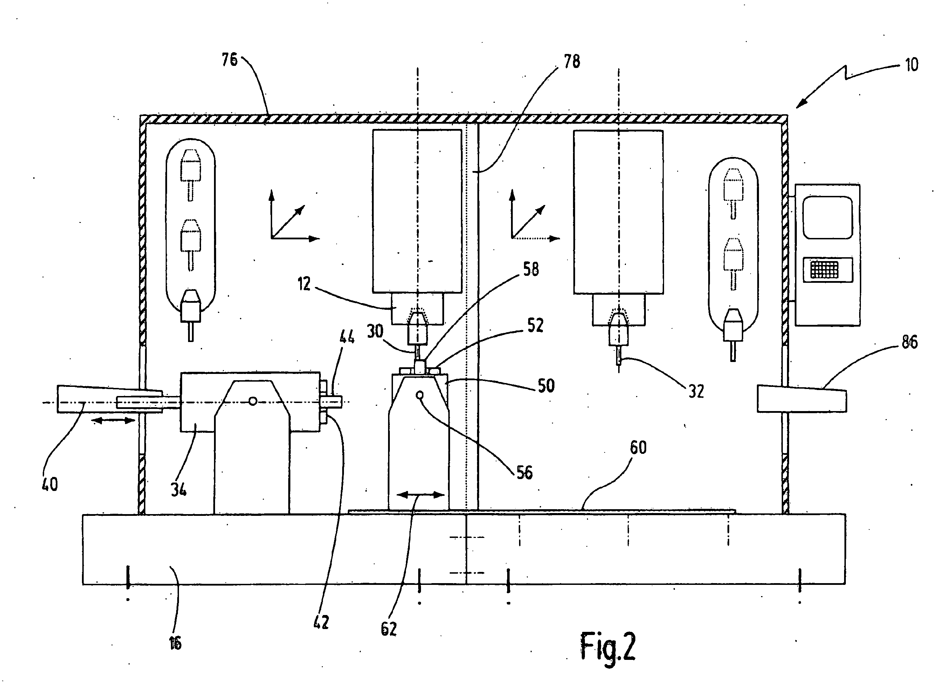

In Fig. 1 und 2 ist ein Ausführungsbeispiel der neuen Werkzeugmaschine in seiner Gesamtheit mit der Bezugsziffer 10 bezeichnet.

Die Werkzeugmaschine 10 besitzt eine erste Werkzeugspindel 12 und eine zweite Werkzeugspindel 14. Beide Werkzeugspindeln sind hier als Fräs- und Bohrspindeln für eine spanabhebende Bearbeitung von metallischen Werkstücken ausgebildet. Die erste Werkzeugspindel 12 ist dementsprechend um eine Drehachse 13 drehbar, und sie ist verfahrbar an einem ersten Grundgestell 16 angeordnet. Die zweite Werkzeugspindel 14 ist um eine Drehachse 15 drehbar und sie ist verfahrbar an einem zweiten Grundgestell 18 angeordnet. Die Grundgestelle 16, 18 sind hier als Maschinenbetten dargestellt, wie sie für sich genommen von Fahrständermaschinen bekannt sind. Die Erfindung ist jedoch nicht auf Fahrständermaschinen beschränkt, d.h. sie kann auch bei Werkzeugmaschinen angewendet werden, bei denen die Werkzeugspindeln 12, 14 in anderer Weise an Grundgestellen gelagert sind, bspw. bei Werkzeugmaschinen in Gantry-Bauweise. Des weiteren ist die Erfindung nicht auf Werkzeugmaschinen mit vertikalen Werkzeugspindeln beschränkt. Sie kann auch bei Maschinen mit horizontalen Werkzeugspindeln und entsprechend angepassten Bewegungsachsen verwendet werden.

In einem bevorzugten Ausführungsbeispiel der Erfindung sind die beiden Grundgestelle 16, 18 separat voneinander ausgebildet. Jedes Grundgestell 16, 18 ist mit Hilfe von Schrauben 20 am Boden verankert. Darüber hinaus können die Grundgestelle 16, 18 über Schrauben 22 im Bereich ihrer Trennstelle 24 miteinander verbunden sein. Bevorzugt ist es jedoch, wenn die Grundgestelle 16, 18 ohne direkte mechanische Kopplung nebeneinander angeordnet sind, so dass ein geringes Spiel verbleibt.

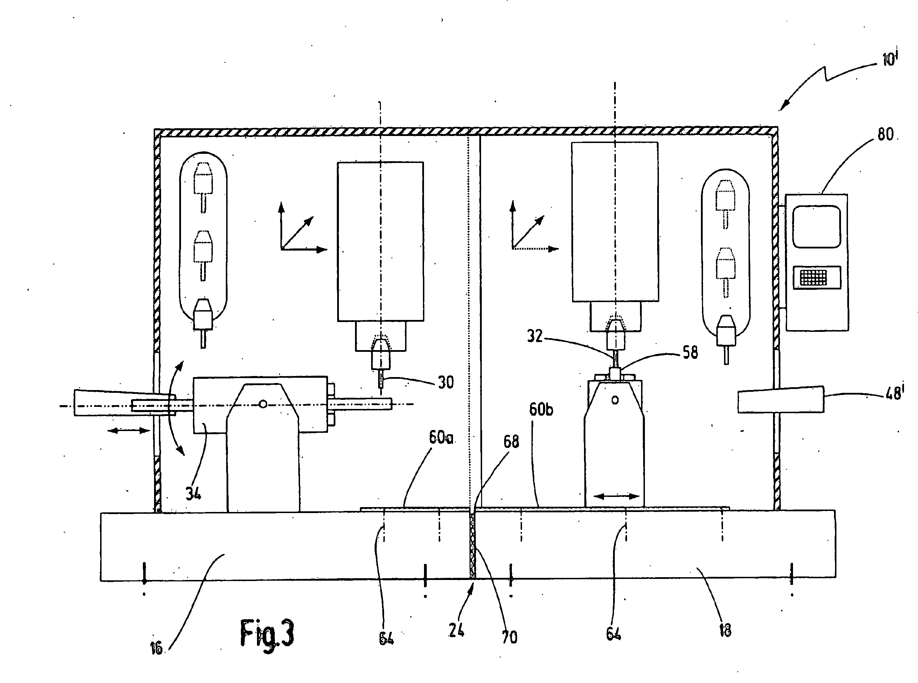

In einem Ausführungsbeispiel sind die beiden Grundgestelle 16, 18 getrennt voneinander aufgestellt, so dass eine Lücke zwischen ihnen verbleibt, die bspw. in der Größenordnung von 1/10 mm liegt (Fig. 3). Zwischen den beiden Grundgestellen 16, 18 ist dann bevorzugt eine Dichtung, bspw. in Form einer Dichtschnur (hier nicht gesondert dargestellt) vorgesehen. Alternativ hierzu kann die neue Werkzeugmaschine in anderen Ausführungsbeispielen der Erfindung jedoch auch mit einem gemeinsamen Grundgestell realisiert sein.

Die Werkzeugspindel 12 ist hier in einem Spindelkasten 26 gelagert, der entlang von drei zueinander Raumachsen x, y, z verfahrbar ist. In einem bevorzugten Ausführungsbeispiel ist der Spindelkasten 26 an einem Fahrständer angeordnet, der über einen Kreuzschlitten (hier nicht dargestellt) in x- und y-Richtung auf dem Maschinenbett 16 gelagert ist.

Die Werkzeugspindel 14 ist in einem zweiten Spindelkasten 26 gelagert, der in einem bevorzugten Ausführungsbeispiel der Erfindung nur entlang von zwei Raumrichtungen y und z verfahrbar ist. In alternativen Ausführungsbeispielen kann die zweite Werkzeugspindel 14 jedoch auch entlang von drei zueinander Raumrichtungen verfahrbar sein, oder die Werkzeugspindeln sind in verschiedenen Raumrichtungen ortsfest.

Jede der beiden Werkzeugspindeln 12, 14 trägt ein Bearbeitungswerkzeug 30 bzw. 32. Die Bearbeitungswerkzeuge 30, 32 sind hier, wie von anderen Werkzeugmaschinen bekannt ist, jeweils in einen sog. Werkzeughalter eingespannt, der bspw. als HSK-Werkzeughalter ausgebildet ist. Typischerweise handelt es sich hier um rotierende Bearbeitungswerkzeuge wie Fräsköpfe, Bohrnadeln oder Gewindeschneider. In einem bevorzugten Ausführungsbeispiel der Erfindung können jedoch auch stehende Bearbeitungswerkzeuge, insbesondere Drehmeißel, in die Werkzeugspindeln 12, 14 eingespannt werden, um eine Drehbearbeitung an einem rotierenden Werkstück zu ermöglichen. Daher sind die beiden Werkzeugspindeln 12, 14 in den bevorzugten Ausführungsbeispielen jeweils so arretierbar, dass sie die bei einer Drehbearbeitung von Werkstücken auftretenden Kräfte aufnehmen können.

Unterhalb der Werkzeugspindel 12 ist eine Werkstückspindel 34 angeordnet. Die Werkstückspindel 34 ist in einer Brücke 36 um eine Schwenkachse 38 verschwenkbar gelagert, wie mit einem Doppelpfeil in Fig. 1 schematisch angedeutet ist. Dementsprechend kann die Werkstückspindel 34 aus der in Fig. 1 dargestellten horizontalen Lage in eine vertikale Lage und in beliebige Zwischenpositionen verschwenkt werden.

Die Werkstückspindel 34 besitzt einen Drehantrieb, mit dessen Hilfe die Werkstückspindel 34 um ihre Drehachse 40 gedreht werden kann. Im bevorzugten Ausführungsbeispiel ist die Werkstückspindel 34 als Drehspindel ausgebildet, d.h. sie ist in der Lage, ein eingespanntes Werkstück mit Drehzahlen von bspw. bis zu 1500 Umdrehungen pro Minute und mit einem Drehmoment bis zu 150 Nm zu drehen. Die Drehbearbeitung erfolgt dann mit einem Werkzeug, das in die Werkzeugspindel 12 eingespannt ist, wobei die Werkzeugspindel 12 während der Drehbearbeitung nur translatorische Bewegungen ausführt.

Am vorderen Ende (rechtes Ende in Fig. 1) besitzt die Werkstückspindel 34 ein Spannfutter 42, das bspw. ein konventionelles 3-Backen-Spannfutter sein kann. Mit Hilfe des Spannfutters 42 wird ein Werkstück 44 in der Werkstückspindel 34 eingespannt. In bevorzugten Ausführungsbeispielen der Erfindung handelt es sich bei dem Werkstück 44 um eine Werkstückstange, die von hinten durch die Werkstückspindel 34 nach vorne geschoben wird, wie dies mit Hilfe des Pfeils 46 dargestellt ist. Die Werkstückstange 44 wird hier über eine Werkstückzuführeinrichtung 48 zugeführt.

Die Werkzeugmaschine 10 besitzt ferner eine zweite Werkstückspindel 50 mit einem Spannfutter 52. Die Werkstückspindel 50 ist in einer Brücke 54 verschwenkbar gelagert, wobei die Schwenkachse mit der Bezugsziffer 56 (Fig. 2) bezeichnet ist. Die Werkstückspindel 50 kann daher ebenfalls von einer horizontalen Lage (Fig. 1) in eine vertikale Lage (Fig. 2) verschwenkt werden. Bevorzugt kann die Werkstückspindel 50 aus der in Fig. 1 gezeigten horizontalen Lage um +/- 90° nach oben und nach unten verschwenkt werden, wobei eine Verschwenkung nach unten eine Bearbeitung eines eingespannten Werkstücks 58 durch die Werkstückspindel 50 hindurch, also von hinten, ermöglicht. Eine solche Ausbildung der Werkstückspindel 50 ist in einer parallelen deutschen Patentanmeldung der Anmelderin mit dem Aktenzeichen 10 2006 007 700.8 beschrieben und für die vorliegende Werkzeugmaschine besonders vorteilhaft. Aufgrund der Dreh- und Verschwenkbarkeit der Werkstücke in den beiden Werkstückspindeln ermöglicht die neue Werkzeugmaschine eine parallele (zeitgleiche) und voneinander verschiedene 5-Achs-Bearbeitung von zwei separaten Werkstücken.

Die Brücke 54 ist auf einer Schlittenführung 60 gelagert und sie ist mit einem Antrieb (hier nicht dargestellt) gekoppelt, so dass sie in Richtung des Doppelpfeils 62 (Fig. 2) entlang der Schlittenführung 60 verfahrbar ist. Dadurch ist es möglich, die Werkstückspindel 50 von einer Übergabeposition (Fig. 1) in eine Bearbeitungsposition (Fig. 2) zu verfahren. In der Übergabeposition kann die Werkstückspindel 50 ein teilbearbeitetes (erstes) Werkstück aus der Werkstückspindel 34 übernehmen. Bevorzugt handelt es sich bei dem teilbearbeiteten Werkstück um das vordere Ende der Werkstückstange 44, das nach dem Einspannen in das Spannfutter 52 der Werkstückspindel 50 vom Rest der Werkstückstange abgetrennt wird. Vorteilhafterweise erfolgt das Abtrennen mit Hilfe eines in die Werkzeugspindel 12 eingespannten Werkzeugs, bspw. einer Säge, einem Trennschleifer oder einem Fräser.

In der Bearbeitungsposition (Fig. 2) kann das in der Werkstückspindel 50 eingespannte Werkstück 58 mit Hilfe eines in der Werkzeugspindel 12 eingespannten Bearbeitungswerkzeugs 30 bearbeitet werden.

Darüber hinaus ist die Schlittenführung 60 so ausgebildet, dass die Werkstückspindel 50 in eine weitere Bearbeitungsposition verfahren werden kann, in der die Werkstückspindel 50 mit der Werkzeugspindel 14 zusammenwirkt (Fig. 3). Dementsprechend fungiert die Werkstückspindel 50 hier nicht nur als Werkstückträger, der ein Werkstück während der Bearbeitung hält, sondern auch als Transportmittel zum Überführen eines Werkstücks aus dem ersten Maschinenteil mit der ersten Werkzeugspindel 12 in das zweite Maschinenteil mit der zweiten Werkzeugspindel 14.

In dem in Fig. 1 und 2 dargestellten Ausführungsbeispiel ist die Schlittenführung an dem zweiten Grundgestell 18 befestigt. Dies ist in Fig. 1 und 2 vereinfacht anhand von Schrauben 64 dargestellt. Demgegenüber ist die Schlittenführung 60 an dem ersten Grundgestell 16 nicht befestigt. Sie ragt lediglich balkonartig in bzw. über das erste Grundgestell 16.

In einem alternativen Ausführungsbeispiel, das in Fig. 3 dargestellt ist, ist die Schlittenführung 60 zweiteilig ausgebildet, d.h. sie beinhaltet eine erste Schlittenführung 60a und eine zweite Schlittenführung 60b. Die Schlittenführung 60a ist an dem ersten Grundgestell 16 befestigt, die zweite Schlittenführung 60b ist an dem zweiten Grundgestell 18 befestigt. Die erste und zweite Schlittenführung 60a, 60b schließen im Bereich der Trennstelle 24 zwischen den beiden Grundgestellen 16, 18 aneinander an. In einem bevorzugten Ausführungsbeispiel sind die beiden Schlittenführungen 60a, 60b nicht starr miteinander verbunden, d.h. es kann im Bereich der Trennstelle 24 eine Lücke 68 verbleiben, die in Fig. 3 allerdings übertrieben stark dargestellt ist. Außerdem ist in Fig. 3 bei der Bezugsziffer 70 eine Dichtung zwischen den beiden Grundgestellen 16, 18 übertrieben stark dargestellt.

In den bevorzugten Ausführungsbeispielen besitzt die Werkzeugmaschine 10 eine gemeinsame Umhausung 76, die sowohl den ersten Arbeitsbereich mit der ersten Werkzeugspindel 12 als auch den zweiten Arbeitsbereich mit der zweiten Werkzeugspindel 14 umgibt. Die Umhausung 76 kann auch zweiteilig ausgebildet sein, wobei dann vorzugsweise im Bereich der Trennstelle eine Labyrinthstruktur vorgesehen ist, um die Gehäuseteile so miteinander zu verbinden, dass eine relative Beweglichkeit und damit eine Entkopplung erhalten bleibt. Eine solche Labyrinthstruktur ist vereinfacht bei der Bezugsziffer 78 dargestellt.

Wenngleich es sich aufgrund der getrennten Grundgestelle 16, 18 und der separat voneinander arbeitenden Werkzeugspindeln 12, 14 im Prinzip um zwei getrennte Werkzeugmaschinen handelt, die in einer Umhausung 76 zusammengefasst sind, ist in bevorzugten Ausführungsbeispielen der Erfindung eine gemeinsame Steuereinheit 80 für beide Maschinenteile vorgesehen. Des Weiteren ist in bevorzugten Ausführungsbeispielen die Kühlmittelversorgung und die Hydraulikanlage für beide Maschinenteile gemeinsam. Demgegenüber besitzt jede Werkzeugspindel 12, 14 jedoch in den bevorzugten Ausführungsbeispielen ein eigenes Werkzeugmagazin, das bei den Bezugsziffern 82, 84 vereinfacht dargestellt ist. Die Werkzeugmagazine 82, 84 können bspw. als Kettenförderer ausgebildet sein, in die eine Vielzahl von Bearbeitungswerkzeugen mit entsprechenden Werkzeughaltern eingespannt sind.

Bei der Bezugsziffer 86 ist eine Werkstückentnahmeeinrichtung vereinfacht dargestellt (Fig. 1 und Fig. 2), an der ein mit der zweiten Werkzeugspindel 14 bearbeitetes Werkstück aus der Werkzeugmaschine 10 entnommen werden kann. Alternativ hierzu kann die Werkzeugmaschine 10 mit einer zweiten Werkstückzuführeinrichtung 48' im Bereich der zweiten Werkzeugspindel 14 ausgerüstet werden, so dass die beiden Maschinenteile mit den Werkzeugspindeln 12, 14 vollständig separat voneinander arbeiten können. In bevorzugten Ausführungsbeispielen des neuen Verfahrens ist jedoch vorgesehen, dass die Werkstücke im Durchlaufbetrieb bearbeitet werden, d.h. ein erstes Werkstück 44 wird zunächst mit Hilfe der ersten Werkzeugspindel 12 teilbearbeitet, anschließend mit Hilfe der Werkstückspindel 50 zu der zweiten Werkzeugspindel 14 überführt und dort fertig gestellt. Darüber hinaus ist es grundsätzlich möglich, ein Werkstück 44/58 allein mit Hilfe der ersten Werkzeugspindel 12 vollständig zu bearbeiten.

Bevorzugt ist jedoch ein Durchlaufbetrieb oder alternativ ein Parallelbetrieb der beiden Maschinenteile. Im letztgenannten Fall ist es bevorzugt, wenn die beiden Maschinenteile identische Werkstücke zeitgleich herstellen.

In den Ausführungsbeispielen in Fig. 1 bis 3 ist die neue Werkzeugmaschine 10 zur Bearbeitung von Werkstückstangen 44 dargestellt. Die neue Werkzeugmaschine und das neue Verfahren können jedoch auch sehr gut für die Bearbeitung von gegossenen oder geschmiedeten Rohlingen verwendet werden, bspw. zur Herstellung von Metallgehäusen. Insbesondere in dem bevorzugten Durchlaufverfahren besitzen die neue Werkzeugmaschine und das neue Verfahren den Vorteil, dass die bearbeiteten Werkstücke während der gesamten Bearbeitung in einer definierten Aufspannung gehalten werden, wodurch eine hochpräzise 6-Seiten-Bearbeitung erreicht wird.

Des Weiteren sind die bevorzugten Ausführungsbeispiele der neuen Werkzeugmaschine mit Drehspindeln 34, 50 als Werkstückträger dargestellt. Alternativ hierzu können die Werkstückträger in anderen Ausführungsbeispielen der Erfindung als einfache Rundachsen (Drehtische) oder sogar als weitgehend starre Werkstückträger ausgebildet sein.

## Patentansprüche

1. Werkzeugmaschine zur spanabhebenden Bearbeitung von Werkstücken, insbesondere von metallischen Werkstücken (44, 58), mit einer ersten Werkzeugspindel (12) zur Aufnahme eines ersten, um eine erste Drehachse (13) rotierenden Bearbeitungswerkzeugs (30) und einer zweiten Werkzeugspindel (14) zur Aufnahme eines zweiten, um eine zweite Drehachse (15) rotierenden Bearbeitungswerkzeugs (32), mit einem ersten und einem zweiten Werkstückträger (34, 50) zur Aufnahme eines ersten und eines zweiten Werkstücks (44, 58), wobei die erste Werkzeugspindel (12) relativ zu dem ersten und relativ zu dem zweiten Werkstückträger (34, 50) verfahrbar ist, um wahlweise das erste oder das zweite Werkstück (44, 58) zu bearbeiten, und wobei die zweite Werkzeugspindel (14) relativ zu dem zweiten Werkstückträger (50) verfahrbar ist, um das zweite Werkstück (58) zu bearbeiten, wobei zumindest einer der Werkstückträger (34, 50) eine Drehachse (40) besitzt, um die ein Werkstück (44, 58) gedreht werden kann, wobei das Werkstück (44, 58) im wesentlichen koaxial zu der Drehachse (40) in den Werkstückträger (34, 50) einspannbar ist, wobei der erste und der zweite Werkstückträger (34, 58) relativ zueinander verfahrbar sind, um ein Werkstück (44, 58) von einem Werkstückträger (34) zum anderen Werkstückträger (50) zu übergeben, **dadurch gekennzeichnet, dass** der zumindest eine Werkstückträger (34, 50) eine Schwenkachse (38, 56) besitzt, die senkrecht zu der Drehachse (40) sowie senkrecht zu der ersten und/oder zweiten Drehachse (13, 15) verläuft, und dass der erste und der zweite Werkstückträger (34, 58) dergestalt relativ zueinander verfahrbar sind, dass der zumindest eine Werkstückträger (34, 50) um seine Schwenkachse geschwenkt wird, um das Werkstück (44, 58) von dem einen Werkstückträger (34) zu dem anderen Werkstückträger (50) zu übergeben.

2. Werkzeugmaschine nach Anspruch 1, **dadurch gekennzeichnet, dass** der zumindest eine Werkstückträger (34, 50) als Drehspindel ausgebildet ist.

3. Werkzeugmaschine nach Anspruch 1 oder 2, **dadurch gekennzeichnet, dass** der erste und der zweite Werkstückträger (34, 50) in einer Ebene (62) parallel zu der Drehachse (40) relativ zueinander verfahrbar sind.

4. Werkzeugmaschine nach einem der Ansprüche 1 bis 3, **dadurch gekennzeichnet, dass** sowohl der erste als auch der zweite Werkstückträger (34, 50) jeweils eine Schwenkachse (38, 56) besitzt, die senkrecht zu der Drehachse (40) verläuft und um die der jeweilige Werkstückträger (34, 50) schwenkbar ist.

5. Werkzeugmaschine nach einem der Ansprüche 1 bis 4, **gekennzeichnet durch** ein erstes und ein zweites Grundgestell (16, 18), wobei die erste Werkzeugspindel (12) an dem ersten Grundgestell (16) angeordnet ist, während die zweite Werkzeugspindel (14) an dem zweiten Grundgestell (18) angeordnet ist.

6. Werkzeugmaschine nach Anspruch 5, **dadurch gekennzeichnet, dass** das erste und das zweite Grundgestell (16, 18) voneinander getrennt sind.

7. Werkzeugmaschine nach Anspruch 6, **dadurch gekennzeichnet, dass** die Grundgestelle (16, 18) eine gemeinsame Umhausung (76) aufweisen.

8. Werkzeugmaschine nach einem der Ansprüche 5 bis 7, **dadurch gekennzeichnet, dass** der zweite Werkstückträger (50) eine Schlittenführung (60) besitzt, die an einem der Grundgestelle (18) befestigt ist und die balkonartig in das andere Grundgestell (16) hineinragt.

9. Werkzeugmaschine nach einem der Ansprüche 5 bis 7, **dadurch gekennzeichnet, dass** das erste und das zweite Grundgestell (16, 18) eine erste und eine zweite Schlittenführung (60a, 60b) für den zweiten Werkstückträger (50) aufweisen, wobei die erste und die zweite Schlittenführung (60a, 60b) aneinander anschließen.

10. Werkzeugmaschine nach einem der Ansprüche 1 bis 9, **dadurch gekennzeichnet, dass** die erste und die zweite Werkzeugspindel (12, 14) parallel nebeneinander angeordnet sind, so dass sie eine Spindelreihe bilden, wobei der zweite Werkstückträger entlang einer Bewegungsachse (62) verfahrbar ist, die im wesentlichen parallel zu der Spindelreihe verläuft.

11. Werkzeugmaschine nach einem der Ansprüche 1 bis 10, **dadurch gekennzeichnet, dass** die erste Werkzeugspindel (12) entlang von drei Bewegungsachsen (x, y, z) verfahrbar ist, während die zweite Werkzeugspindel (14) nur entlang von zwei Bewegungsachsen (y, z) verfahrbar ist.

12. Werkzeugmaschine nach einem der Ansprüche 1 bis 11, **gekennzeichnet durch** eine gemeinsame Steuereinheit (80) für die erste und die zweite Werkzeugspindel (12, 14).

13. Werkzeugmaschine nach einem der Ansprüche 1 bis 12, **gekennzeichnet durch** eine Werkstückzuführeinrichtung (48) und eine Werkstückentnahmeeinrichtung (86), wobei die Werkstückzuführeinrichtung (48) mit dem ersten Werkstückträger (34) zusammenwirkt und wobei die Werkstückentnahmeeinrichtung (86) mit dem zweiten Werkstückträger (50) zusammenwirkt.

14. Werkzeugmaschine nach einem der Ansprüche 1 bis 13, **gekennzeichnet durch** eine erste und eine zweite Werkstückzuführeinrichtung (48, 48'), wobei die erste Werkstückzuführeinrichtung (48) mit dem ersten Werkstückträger (34) zusammenwirkt und wobei die zweite Werkstückzuführeinrichtung (48') mit dem zweiten Werkstückträger (50) zusammenwirkt.

15. Werkzeugmaschine nach einem der Ansprüche 1 bis 14, **dadurch gekennzeichnet, dass** jede Werkzeugspindel (12, 14) ein eigenes Werkzeugmagazin (82, 84) besitzt.

16. Verfahren zur spanabhebenden Bearbeitung von Werkstücken (44, 58), insbesondere von metallischen Werkstücken, mit den Schritten:
- Einspannen eines ersten Werkstücks (44) in einen ersten Werkstückträger (34),
- Einspannen eines ersten, um eine erste Drehachse (13) rotierenden Bearbeitungswerkzeugs (30) in eine erste Werkzeugspindel (12),
- Bearbeiten des ersten Werkstücks (44) in dem ersten Werkstückträger (34) mit Hilfe des ersten rotierenden Bearbeitungswerkzeugs (32), um ein teilbearbeitetes Werkstück (58) herzustellen,
- Übergeben des teilbearbeiteten Werkstücks (58) an einen zweiten Werkstückträger (50), wobei der zweite Werkstückträger (50) relativ zu dem ersten Werkstückträger (34) verfahren wird, um das teilbearbeitete Werkstück (58) zu übernehmen, und
- Bearbeiten des teilbearbeiteten Werkstücks (58) in dem zweiten Werkstückträger (50), wobei das teilbearbeitete Werkstück (58) in dem zweiten Werkstückträger (50) mit Hilfe eines zweiten, um eine zweite Drehachse (15) rotierenden Bearbeitungswerkzeugs (32) bearbeitet wird, das in eine zweite Werkzeugspindel (14) eingespannt wird,
**dadurch gekennzeichnet, dass** der zweite Werkstückträger (50) dergestalt relativ zu dem ersten Werkstückträger (34) verfahren wird, um das teilbearbeitete Werkstück (58) zu übernehmen, dass dazu zumindest einer der Werkstückträger (34, 50) um eine Schwenkachse (38, 56) geschwenkt wird, die der jeweilige Werkstückträger (34, 50) besitzt und die senkrecht zu einer Drehachse (40), die der jeweilige Werkstückträger (34, 50) besitzt und um die das in ihm eingespannte teilbearbeitete Werkstück gedreht werden kann, sowie senkrecht zu der ersten und/oder zweiten Drehachse (13, 15) der Bearbeitungswerkzeuge (32) verläuft.

## Claims

1. A machine tool for machine cutting of workpieces, in particular of metallic workpieces (44, 58), having a first tool spindle (12) for receiving a first machining tool (30) rotating about a first axis of rotation (13), and a second tool spindle (14) for receiving a second machining tool (32) rotating about a second axis of rotation (15), and a first and a second workpiece carrier (34, 50) for receiving a first and a second workpiece (44, 58), the first tool spindle (12) being movable in relation to the first and in relation to the second workpiece carrier (34, 50) in order to selectively machine the first or the second workpiece (44, 58), the second tool spindle (14) being movable in relation to the second workpiece carrier (50) in order to machine the second workpiece (58), wherein at least one of the workpiece carriers (34, 50) has an axis of rotation (40) about which a workpiece (44, 58) can be rotated, wherein the workpiece (44, 58) can be chucked into the workpiece carrier (34, 50) substantially coaxially with respect to the axis of rotation (40), wherein the first and the second workpiece carrier (34, 58) are movable in relation to one another in order to transfer a workpiece (44, 58) from one workpiece carrier (34) to the other workpiece carrier (50), **characterized in that that** the at least one workpiece carrier (34, 50) has a pivot axis (38, 56) which runs perpendicularly with respect to the axis of rotation (40) and perpendicular with respect to the first and second axis of rotation (13,15), and that the first and the second workpiece carrier (34, 50) are movable in relation to one another such that the at least one workpiece carrier (34, 50) is pivoted about its pivot axis in order to transfer the workpiece (44, 58) from one workpiece carrier (34) to the other workpiece carrier (34).

2. The machine tool according to Claim 1, **characterized in that** the at least one workpiece carrier (34, 50) is designed as a lathe-turn spindle.

3. The machine tool according to Claim 1 or 2, **characterized in that** the first and the second workpiece carrier (34, 50) are movable in relation to one another in a plane (62) parallel to the axis of rotation (40).

4. The machine tool according to Claim 1, **characterized in that** the first as well as the second workpiece carrier (34, 50) each have a pivot axis (38, 56) that runs perpendicular to the axis of rotation (40) and about which the respective worpice carrier (34, 50) can be pivoted.

5. The machine tool according to anyone of Claims 1 to 4, **characterized by** a first and a second base frame (16, 18), the first tool spindle (12) being arranged on the first base frame (16), whilst the second tool spindle (14) is arranged on the second base frame (18).

6. The machine tool according to Claims 5, **characterized in that** the first and the second base frame (16, 18) are separated from one another.

7. The machine tool according to Claim 6, **characterized in that** the base frames (16, 18) have a common housing (76).

8. The machine tool according to anyone of Claims 5 to 7, **characterized in that** the second workpiece carrier (50) has a slide guide (60) which is fastened to one of the base frames (18) and which projects into the other base frame (16) in the manner of a balcony.

9. The machine tool according to anyone of Claims 5 to 7, **characterized in that** the first and the second base frame (16, 18) have a first and a second slide guide (60a, 60b) for the second workpiece carrier (50), the first and the second slide guide (60a, 60b) adjoining one another.

10. The machine tool according to anyone of Claims 1 to 9, **characterized in that** the first and the second tool spindle (12, 14) are arranged next to one another in parallel, such that they form a spindle row, the second workpiece carrier being movable along a movement axis (62) which runs essentially parallel with respect to the spindle row.

11. The machine tool according to anyone of Claims 1 to 10, **characterized in that** the first tool spindle (12) is movable along three movement axes (x, y, z), whilst the second tool spindle (14) is movable only along two movement axes (y, z).

12. The machine tool according to anyone of Claims 1 to 11, **characterized by** a common control unit (80) for the first and the second tool spindle (12, 14).

13. The machine tool according to anyone of Claims 1 to 12, **characterized by** a workpiece supply device (48) and a workpiece extraction device (86), the workpiece supply device (48) cooperating with the first workpiece carrier (34) and the workpiece extraction device (86) cooperating with the second workpiece carrier (50).

14. The machine tool according to anyone of Claims 1 to 13, **characterized by** a first and a second workpiece supply device (48, 48'), the first workpiece supply device (48) cooperating with the first workpiece carrier (34) and the second workpiece supply device (48') cooperating with the second workpiece carrier (50).

15. The machine tool according to anyone of Claims 1 to 14, **characterized in that** each tool spindle (12, 14) has an associated tool magazine (82, 84).

16. A method for machine cutting of workpieces (44, 58), in particular of metallic workpieces, comprising the steps:
- chucking a first workpiece (44) into a first workpiece carrier (34),
- chucking a first machining tool (30) rotating about a first axis of rotation (13) into a first tool spindle (12),
- machining the first workpiece (44) in the first workpiece carrier (34) by means of the first rotating machining tool (32) in order to produce a partly machined workpiece (58),
- transferring the partly machined workpiece (58) to a second workpiece carrier (50), the second workpiece carrier (50) being moved in relation to the first workpiece carrier (34) in order to take over the partly machined workpiece (58), and
- machining the partly machined workpiece (58) in the second workpiece carrier (50), whereby the partly machined workpiece (58) is machined in the second workpiece carrier (50) by means of a second machining tool (32) rotating about a second axis of rotation (15) and chucked into a second tool spindle (14)
**characterized in that** the second workpiece carrier (50) is being moved relative to the first workpiece carrier (34) such as to take over the partly machined workpiece (58), that to this end at least one of said workpiece carriers (34, 50) is pivoted about a pivot axis (38, 56) the respective workpiece carrier (34, 50) possesses, which pivot axis runs perpendicular to the axis of rotation (40) the respective workpiece carrier (34, 50) possesses, about which axis of rotation the partly machined workpiece clamped into said respective workpiece carrier can be pivoted, and which axis of rotation runs perpendicular to said first and/or second axis of rotation (13, 15) of the machining tool (32).

## Revendications

1. Machine-outil pour l'usinage par enlèvement de copeaux de pièces à usiner, en particulier de pièces métalliques (44, 58), comportant une première broche porte-outil (12) destinée à recevoir un premier outil d'usinage (30) rotatif autour d'un premier axe de rotation (13), comportant une deuxième broche porte-outil (14) destinée à recevoir un deuxième outil d'usinage (32) rotatif autour d'un deuxième axe de rotation (15), et comportant un premier et un deuxième porte-pièce (34, 50) destiné à recevoir une première et une deuxième pièce à usiner (44, 58), la première broche porte-outil (12) pouvant être déplacée par rapport au premier et au deuxième porte-pièce (34, 50) pour usiner au choix la première ou la deuxième pièce à usiner (44, 58), la deuxième broche porte-outil (14) pouvant être déplacée par rapport au deuxième porte-pièce (50) pour usiner la deuxième pièce à usiner (58), au moins l'un des porte-pièces (34, 50) comporte un axe de rotation (40), autour duquel une pièce à usiner (44, 58) peut être amenée en rotation, la pièce à usiner (44, 58) pouvant être montée dans le porte-pièce (34, 50) sensiblement coaxialement à l'axe de rotation (40), et le premier et le deuxième porte-pièce (34, 58) pouvant être déplacés l'un par rapport à l'autre pour transférer une pièce à usiner (44, 58) d'un porte-pièce (34) à l'autre porte-pièce (50), **caractérisée en ce que** ledit au moins un porte-pièce (34, 50) comporte un axe de pivotement (38, 56) qui est orienté perpendiculairement à l'axe de rotation (40) ainsi que perpendiculairement au premier et/ou au deuxième axe de rotation (13, 15), et **en ce que** le premier et le deuxième porte-pièce (34, 50) peuvent être déplacés l'un par rapport à l'autre de telle sorte qu'au moins un porte-pièce (34, 50) peut pivoter autour de son axe de pivotement, pour transférer une pièce à usiner (44, 58) d'un porte-pièce (34) à l'autre porte-pièce (50).

2. Machine-outil selon la revendication 1, **caractérisée en ce que** ledit au moins un porte-pièce (34, 50) est réalisé sous la forme d'une broche rotative.

3. Machine-outil selon la revendication 1 ou 2, **caractérisée en ce que** le premier et le deuxième porte-pièce (34, 50) peuvent être déplacés l'un par rapport à l'autre dans un plan (62) parallèlement à l'axe de rotation (40).

4. Machine-outil selon l'une quelconque des revendications 1 à 3, **caractérisée en ce que** le premier et le deuxième porte-pièces (34, 50) comporte un axe de pivotement respectif (38, 56) qui est orienté perpendiculairement à l'axe de rotation (40) et autour duquel le porte-pièce respectif (34, 50) peut pivoter.

5. Machine-outil selon l'une quelconque des revendications 1 à 5, **caractérisée par** un premier et un deuxième bâti de base (16, 18), la première broche porte-outil (12) étant agencée sur le premier bâti de base (16), tandis que la deuxième broche porte-outil (14) est agencée sur le deuxième bâti de base (18).

6. Machine-outil selon la revendication 5, **caractérisée en ce que** le premier et le deuxième bâti de base (16, 18) sont séparés l'un de l'autre.

7. Machine-outil selon la revendication 6, **caractérisée en ce que** les bâtis de base (16, 18) comportent un carter (76) commun.

8. Machine-outil selon l'une quelconque des revendications 5 à 7, **caractérisée en ce que** le deuxième porte-pièce (50) comporte un guidage de chariot (60), qui est fixé à l'un des bâtis de base (18) et qui s'engage dans l'autre bâti de base (16) à la manière d'un balcon.

9. Machine-outil selon l'une quelconque des revendications 5 à 7, **caractérisée en ce que** le premier et le deuxième bâti de base (16, 18) comportent un premier et un deuxième guidages de chariot (60a, 60b) pour le deuxième porte-pièce (50), ledit premier et ledit deuxième guidages de chariot (60a, 60b) étant adjacents l'un à l'autre.

10. Machine-outil selon l'une quelconque des revendications 1 à 9, **caractérisée en ce que** la première et la deuxième broche porte-outil (12, 14) sont disposées parallèlement l'une à côté de l'autre, de telle sorte qu'elles forment une rangée de broches, sachant que le deuxième porte-pièce peut être déplacé le long d'un axe de mouvement (62) qui est sensiblement parallèle à la rangée de broches.

11. Machine-outil selon l'une quelconque des revendications 1 à 10, **caractérisée en ce que** la première broche porte-outil (12) peut être déplacée le long de trois axes de mouvement (x, y, z), alors que la deuxième broche porte-outil (14) peut être déplacée uniquement le long de deux axes de mouvement (y, z).

12. Machine-outil selon l'une quelconque des revendications 1 à 11, **caractérisée par** une unité de commande (80) commune pour la première et la deuxième broche porte-outil (12, 14).

13. Machine-outil selon l'une quelconque des revendications 1 à 12, **caractérisée par** un dispositif d'acheminement des pièces (48) et un dispositif de prélèvement des pièces (86), le dispositif d'acheminement des pièces (48) coopérant avec le premier porte-pièce (34) et le dispositif de prélèvement des pièces (86) coopérant avec le deuxième porte-pièce (50).

14. Machine-outil selon l'une quelconque des revendications 1 à 13, **caractérisée par** un premier et un deuxième dispositif d'acheminement des pièces (48, 48'), le premier dispositif d'acheminement des pièces (48) coopérant avec le premier porte-pièce (34) et le deuxième dispositif d'acheminement des pièces (48') coopérant avec le deuxième porte-pièce (50).

15. Machine-outil selon l'une quelconque des revendications 1 à 14, **caractérisée en ce que** chaque broche porte-outil (12, 14) comporte son propre magasin d'outils (82, 84).

16. Procédé pour l'usinage par enlèvement de copeaux de pièces à usiner (44, 58), en particulier de pièces métalliques, comportant les étapes :
- serrage d'une première pièce à usiner (44) dans un premier porte-pièce (34),
- montage d'un premier outil d'usinage (30) rotatif autour d'un premier axe de rotation (13), dans une première broche porte-outil (12),
- usinage de la première pièce à usiner (44) dans le premier porte-pièce (34) au moyen du premier outil d'usinage (32) rotatif, afin de réaliser une pièce (58) partiellement usinée,
- transfert de la pièce (58) partiellement usinée vers un deuxième porte-pièce (50), ledit deuxième porte-pièce (50) étant déplacé par rapport au premier porte-pièce (34) afin de prendre la pièce (58) partiellement usinée, et
- usinage de la pièce (58) partiellement usinée dans le deuxième porte-pièce (50), la pièce (58) partiellement usinée étant usinée au moyen d'un deuxième outil d'usinage (32) rotatif autour d'un deuxième axe de rotation (15), qui est monté dans une deuxième broche porte-outil (14),
**caractérisé en ce que** le deuxième porte-pièce (50) peut être déplacé par rapport au premier porte-pièce (34), pour transférer la pièce (58) partiellement usinée, de telle sorte qu'au moins un porte-pièce (34, 50) peut pivoter autour d'un axe de pivotement (38, 56) que comporte le porte-pièce respectif (34, 50) et qui est orienté perpendiculairement à un axe de rotation (40), que comporte le porte-pièce respectif (34, 50) et autour duquel peut tourner la pièce partiellement usinée serrée sur ce porte-pièce respectif (34, 50), ainsi que perpendiculairement au premier et/ou au deuxième axe de rotation (13, 15) des outils d'usinage (32).
